(19) Europäisches Patentamt / European Patent Office / Office européen des brevets

(11) **EP 3 828 506 B1**

(12) **EUROPEAN PATENT SPECIFICATION**

(45) Date of publication and mention of the grant of the patent:
**29.06.2022 Bulletin 2022/26**

(21) Application number: **20210572.2**

(22) Date of filing: **30.11.2020**

(51) International Patent Classification (IPC):
*G01D 3/036* (2006.01)    *G01B 9/02* (2022.01)
*G01D 5/26* (2006.01)    *G01K 11/00* (2006.01)
*G01L 9/00* (2006.01)

(52) Cooperative Patent Classification (CPC):
**G01D 5/266; G01B 9/02007; G01B 9/02018; G01B 9/02044; G01B 9/0207; G01B 9/02083; G01B 11/14; G01D 3/0365; G01K 11/3206; G01L 9/0079;** G01B 2290/60

(54) **OPTICAL SENSOR FOR THE MEASUREMENT OF PHYSICAL PARAMETERS IN HARSH ENVIRONMENTS AND METHODS OF MAKING AND USING THE SAME**

OPTISCHER SENSOR ZUR MESSUNG PHYSIKALISCHE GRÖSSE IN RAUER UMGEBUNG SOWIE VERFAHREN ZU HERSTELLUNG UND ZUM GEBRAUCH DERSELBEN

CAPTEUR OPTIQUE POUR LA MESURE DE PARAMÈTRES PHYSIQUES DANS DES ENVIRONNEMENTS DIFFICILES ET MÉTHODES DE FABRICATION ET D'UTILISATION DU MÊME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.11.2019 US 201962942064 P**

(43) Date of publication of application:
**02.06.2021 Bulletin 2021/22**

(73) Proprietor: **Meggitt SA**
**1701 Fribourg (CH)**

(72) Inventors:
• **VEZ, Dominique**
  **1701 Fibourg (CH)**
• **GUÉLAT, Blaise**
  **1701 Fibourg (CH)**
• **NICCHIOTTI, Gianluca**
  **1701 Fibourg (CH)**
• **DIAS, Frédérico**
  **1701 Fibourg (CH)**
• **PARAT, Vincent**
  **1701 Fibourg (CH)**

(74) Representative: **J A Kemp LLP**
**80 Turnmill Street**
**London EC1M 5QU (GB)**

(56) References cited:
**EP-A1- 1 598 635    GB-A- 2 319 335**

GB-A- 2 509 105    US-A1- 2012 050 750

• YUN-JIANG RAO ET AL: "Universal Fiber-Optic Point Sensor System for Quasi-Static Absolute Measurements of Multiparameters Exploiting Low Coherence Interrogation", JOURNAL OF LIGHTWAVE TECHNOLOGY, IEEE, USA, vol. 14, no. 4, 1 April 1996 (1996-04-01), XP011028480, ISSN: 0733-8724
• LEANDRO DANIEL ET AL: "All-PM Fiber Loop Mirror Interferometer Analysis and Simultaneous Measurement of Temperature and Mechanical Vibration", JOURNAL OF LIGHTWAVE TECHNOLOGY, IEEE, USA, vol. 36, no. 4, 15 February 2018 (2018-02-15), pages 1105-1111, XP011677851, ISSN: 0733-8724, DOI: 10.1109/JLT.2017.2761121 [retrieved on 2018-02-15]
• ALLAN C L WONG ET AL: "Multiplexed fibre Fizeau interferometer and fibre Bragg grating sensor system for simultaneous measurement of quasi-static strain and temperature using discrete wavelet transform; Multiplexed FFI and FBG sensor system for simultaneous measurement", MEASUREMENT SCIENCE AND TECHNOLOGY, IOP, BRISTOL, GB, vol. 17, no. 2, 1 February 2006 (2006-02-01), pages 384-392, XP020103388, ISSN: 0957-0233, DOI: 10.1088/0957-0233/17/2/021

- RAO Y J ET AL: "DEVELOPMENT OF PROTOTYPE FIBER-OPTIC-BASED FIZEAU PRESSURE SENSORS WITH TEMPERATURE COMPENSATION AND SIGNAL RECOVERY BY COHERENCE READING", JOURNAL OF LIGHTWAVE TECHNOLOGY, IEEE, USA, vol. 12, no. 9, 1 September 1994 (1994-09-01), pages 1685-1695, XP000484347, ISSN: 0733-8724, DOI: 10.1109/50.320953

## Description

### FIELD OF THE INVENTION

This patent document relates generally to optical sensors. More particularly, the subject matter of this patent document relates to optical sensors for use in aircraft engines, land based turbines such as gas or steam turbines or any power generation machine with a combustion chamber.

### BACKGROUND

Fiber optic sensing technologies provide several advantages over conventional electrical sensing technologies for the monitoring and control of physical parameters of machines such as aircraft engines, land-based turbines such as gas or steam turbines or any power generation machine with a combustion chamber. Among others, the following advantages have been demonstrated: (i) improved measurement accuracy and bandwidth; (ii) inherent insensitivity to external perturbations, i.e. electromagnetic interferences and radio frequency interferences; (iii) long to very-long range measurement with negligible signal decay; (iv): distributed sensing: the possibility of multiplexing a large number of individually addressed point sensors; and (v) compatibility with high to very high temperatures. The replacement of electrical sensors by fiber optic sensors is therefore desirable for many applications, and in particular aerospace applications.

Among aerospace applications, an aircraft engine requires multiple sensing systems to reliably and safely operate. Some sensing systems provide physical parameters to the electronic engine controller (EEC) for controlling the engine operation. Other sensing systems provide parameters to the engine monitoring unit (EMU) to monitor the engine operation, alerting the pilot in case of unsafe conditions or the maintenance on the ground, when the engine needs to be overhauled. In current aircraft engines, all sensors are based on electrical working principle technologies such as piezoelectric, piezoresistive and capacitive measurement principles. For every individual sensor, an electrical readout signal is sent through an electrical wire connected to the engine electronic units. These discrete outputs lead to long cable harnesses with multiple connectors, adding complexity to the engine architecture and significant weight, which increases the fuel consumption of the engine.

One particular application is the measurement of the pressure between the latest stage of the engine high pressure compressor and the combustion chamber. The measurement output is used in the control loop of the engine operation. Up to now, no invention has been shown to be capable of reliably measuring absolute (static) pressure at temperature exceeding 300°C in operation and definitely nothing that can handle above 400°C or 500°C. Therefore, the engine control relies on low temperature pressure sensors situated on the electronic units mounted on the fan case of the engine, which is the lowest temperature region of the engine (max operating temperature typically between 80°C to 125°C). This configuration requires a pressure pipe to be routed from the combustion chamber to the sensor and compensate for the temperature difference in the measurement. Moreover, it can lead to measurement instability in certain environmental conditions. One objective of the present invention is to directly measure pressure in the engine core, eliminating the pressure pipe, saving weight, and improving the accuracy of the measurement.

EP 1,598,635A discloses a signal conditioner to measure the length of an interferometric gap in a Fabry-Perot sensor (interferometer). The device includes a light source, a Fabry-Perot interferometer capable of spanning a range of gaps in response to physical changes in the environment, a second interferometer that is placed in series with the Fabry-Perot interferometer which does not filter any particular wavelengths of light but acts as an optical cross-correlator such as a Fizeau wedge, a detector for converting the correlated light signal into electronic signals, and an electronic processor which controls system elements and generates a signal indicative of the length of the gap spanned by the Fabry-Perot sensor.

GB 2,319,335A discloses an interferometer integrated on a silicon-on-insulator chip, the optical chip having integrated thereon fibre connection means for connecting the optical chip to one or more optical fibres, the fibre connection means comprising a groove formed in the substrate for receiving an optical fibre, waveguide means for transmitting light to or from the fibre connection means, the waveguide means comprising one or more rib waveguides formed in the layer of silicon, and at least one phase modulator for altering the phase of light travelling along a rib waveguide on the chip, the arrangement being such as to form an interferometer in which light transmitted along different optical paths can be combined and the effective path length of at least one of the optical paths can be altered by means of the phase modulator.

### SUMMARY

An optoelectronic system for measuring physical parameters is provided. The optoelectronic system is specifically adapted for measuring physical parameters in harsh environments such as those found in engine compartments. The invention is defined in claim 1. Further aspects and preferred embodiments are defined in the dependent claims. Any aspects, embodiments and examples of the present disclosure which do not fall under the scope of the appended claims do not form part of the invention and are merely provided for illustrative purposes.

In a preferred embodiment, the optoelectronic system comprises: an optical sensor comprising: a first Fabry-Perot interferometer arranged to receive a first portion of a combined light wherein the first Fabry-Perot interferometer is exposed to a physical parameter of interest and temperature ; and a second Fabry-Perot interferometer arranged to receive a second portion of the combined light wherein the second Fabry-Perot interferometer is exposed to temperature and not exposed to the physical parameter of interest;

The system further comprises an interrogator in optical communication with the optical sensor, the interrogator comprises: a first narrow band light source with a first peak frequency; a second narrow band light source with a second peak frequency different from the first peak frequency; a coupler arranged to couple the first narrow band light source with the second narrow band light source into the combined light; a first Fizeau interferometer arranged to receive light reflected from a first cavity of the first Fabry-Perot interferometer through an optical path comprising a combination of lenses and/or mirrors to a first optical detector; a second Fizeau interferometer arranged to receive light reflected from a second cavity of the second Fabry-Perot interferometer through an optical path comprising a combination of lenses and/or mirrors to a second optical detector; and a processor arranged to analyze the data received by the first optical detector and second optical detector and calculate a value for temperature and the second physical parameter.

.Although any physical parameter may be measured using the systems taught herein, in preferred embodiments, pressure and temperature are measured.

In some embodiments, the first light source and second light source are part of an emissions module that is physically separate from the first Fizeau interferometer, the second Fizeau interferometer, the first optical detector, the second optical detector and the optical elements used prior to the optical detector, which all reside on a detection module. Together, the emission module and the detection module comprise the interrogator. In yet other embodiments, the components of the emission module and detection module may be combined into one module.

In preferred embodiments, the first Fizeau interferometer, and the second Fizeau interferometer, the first and second optical detectors and the optical elements are all mounted on a plate made from a material with a low coefficient of thermal expansion. In some embodiments, the coefficient of thermal expansion is below $2 \times$ 10-6 /°C. In yet other embodiments, the coefficient of thermal expansion is below $1 \times$ 10-6 /°C.

The optoelectronic systems taught herein are specifically designed for use in harsh environments. In particular, the systems taught herein are designed for use with turbofan engines. To this end, in some embodiments, the optical sensors are mounted to the engine core of a turbofan engine. In such embodiments, the interrogator may be mounted to the fan case of the turbofan engine and optically coupled to the optical transducers via at least one optical fiber.

In some embodiments, the first light source, second light source, the first Fizeau interferometer, the second Fizeau interferometer, the first optical detector and the second optical detector are all hermitically sealed in metal boxes with a controlled internal atmosphere using air, vacuum or an inert gas.

In another aspect of the present invention, a method of detecting a physical parameter in a harsh environment using an optical sensor is provided. In preferred embodiments, the method comprises: coupling a first narrow band light source having a first peak frequency with a second narrow band light source with a second peak frequency different from the first peak frequency to create a combined light; receiving a first portion of the combined light in a first Fabry-Perot interferometer; exposing the first Fabry-Perot interferometer to temperature and a second physical parameter; receiving a second portion of the combined light in a second Fabry-Perot interferometer; exposing the second Fabry-Perot interferometer to temperature but not the second physical parameter; receiving light reflected from a first cavity of the first Fabry-Perot interferometer into a first optical detector through an optical path comprising a combination of lenses and/or mirrors nd a first Fizeau interferometer; receiving light reflected from a second cavity of the second Fabry-Perot interferometer into a second optical detector through an optical path comprising a combination of lenses and/or mirrors and a second Fizeau interferometer; and analyzing the data received by the first optical detector and second optical detector to calculate a value for temperature and the second physical parameter.

Some embodiments of the method further comprise using a numerical method to measure a first dimension of a first cavity of the first Fabry-Perot interferometer and to measure a second dimension of a second cavity of the second Fabry-Perot interferometer by detecting a maximum of the destructive interference pattern produced along a first optical circuit and a second optical circuit.

In yet still other embodiments, the method further comprises using a numerical method to detect and track the maximum of the destructive interference pattern based on pixel intensity of a linear or matrix photo-detector wherein the interference peak information is combined with geometry of the first Fizeau interferometer and second Fizeau interferometer to compute the first dimension and the second dimension.

In some embodiments, the processor calculates the Fourier Transform of the interference spectrum to determine a change of dimension of a first cavity of the first Fabry-Perot interferometer.

In some embodiments, the method further comprises converting the second dimension into a temperature measurement using physical properties of the second cavity and converting the first dimension into the measured physical parameter using physical properties of the first cavity and the temperature measurement.

In some methods, demodulation is used to remove non-uniform illumination of the first optical detector.

In some methods, a low pass filter is used to remove electro-optic noise.

In order to detect and track a peak of destructive interference, some methods use a simulated annealing search or sub-pixel interpolation.

In still yet other embodiments, a Fast Fourier Transform of a spectrum of a fringe pattern is calculated to balance an intensity of the first narrow band light sources and the second narrow band light source across a temperature range. When balanced, the same light power from each of the two light sources reaches the optical detectors

In some embodiments, the interrogator is calibrated to measure a cavity dimension of the first Fabry-Perot interferometer independently of the second transducer. In such embodiments, the physical parameters of the second transducer may be stored in the interrogator.

Each of the foregoing various aspects, together with those set forth in the claims and described in connection with the embodiments summarized above and disclosed herein may be combined to form claims for an apparatus, system, methods of manufacture and/or use in any way disclosed herein without limitation.

These and other features, aspects and advantages are described below with reference to the drawings, which are intended to illustrate but not to limit the invention. In the drawings, like reference characters denote corresponding features consistently throughout similar embodiments.

## BRIEF DESCRIPTION OF THE DRAWINGS

FIG. 1 illustrates a schematic view of the system overview of one embodiment of the optical sensor.

FIG. 2 illustrates the schematic view of Fig. 1 with the subcomponents of the optical integrator and optical transducer shown.

FIG. 3 illustrates one embodiment of an optical sensor as described in Figs. 1 and 2 installed on a turbofan engine.

Fig. 4 illustrates some Error! Reference source not found.typical lengths of the system components in an optical sensor for a high bypass ratio turbofan engine.

FIG. 5 illustrates a break out cross-section of one embodiment of an optical transducer for use with the optical sensors described herein.

FIG. 6 illustrates a schematic view of an extension cable for use with the optical sensors taught herein.

FIG. 7 illustrates an isometric view of one embodiment of an optoelectronic interrogator with a transparent housing.

FIG. 8 illustrates an exploded view of the optoelectronic interrogator of Fig. 7.

Fig. 9 illustrates a schematical view of an optical design and light path for one embodiment of an optical detection module and an optical emissions module for use with the optical interrogator disclosed herein

FIG. 10 illustrates a schematic view of how the system may use multiplexing to use a single interrogator for multiple sensors.

FIG. 11 illustrates a block diagram of one embodiment for an optoelectronic interrogator LRU that is sub-modularized according to the system needs

FIG. 12 illustrates a block diagram of one embodiment of an architecture for a CPM.

FIG. 13 illustrates a block diagram of one embodiment of an OIM architecture.

FIG. 14 illustrates a schematic of one embodiment of a temperature control layer for the OIM.

FIG. 15 illustrates an expected fringe interference pattern with the maximum destructive interference point on the pattern identified.

Fig. 16 illustrates a fringe interference pattern with: (i) geometrical and optical fiber effects which bring a "bell" modulation over the fringe shape and (ii) electro-optical noise.

Fig. 17 illustrates a block diagram of an example of system signal processing to compute and compensate for a pressure measurement

## DETAILED DESCRIPTION

The present invention is a fiber optic sensing system, which mitigates the problems related to harsh environment of a machine such the one previously described in the background. The systems herein are specifically adapted for use in harsh environments. While a harsh environment can be any adverse environment, harsh environment as used herein means an environment like typically found in an aircraft engine. Accordingly, temperatures for the interrogator ranging from -40°C to 80°C or -55°C to 125°C and for the transducer from -55°C to 700°C and beyond, depending on the measurement type. These temperatures are coupled to severe vibrations. In one example, the system is designed for the static pressure measurement of the combustion chamber of an airplane turbofan engine. This system is capable of measuring pressure and other physical parameters with the accuracy and reliability required for engine applications. By centralizing all data readout and processing in one single optoelectronic interrogator and/or multiplexing the output of multiple sensors over one fiber, the engine sensing architecture is greatly simplified and can be made significantly lighter than electrical systems.

System description

Hereafter one exemplary embodiment is described for the measurement of pressure and temperature in the high temperature core of an aircraft turbofan engine. Alternative embodiments can be adapted to other machines such as the ones described in the background section or may be used in any high temperature environment; especially those previously limited to electrical sensors. As just one example, the sensing systems herein may be used on a hydrogen powered engine. Other embodiments may use the same system definition to measure additional parameters such as, temperature, mechanical displacement, mechanical stress, vibration, acceleration, rotation speed (e.g. of a shaft), clearance, closed/open status (e.g. for a valve), gas flow, and other physical parameters used to control a machine operation or monitor a machine condition.

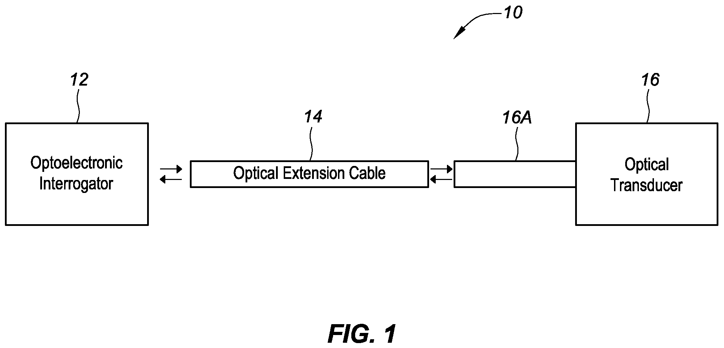

FIG. 1 illustrates a schematic view of the system overview of one embodiment of the optical sensor 10. As may be seen from Fig. 1, the optical sensor 10 may consist of three subsystems: an optoelectronic interrogator 12, an optional optical extension cable 14 and an optical transducer 16. The subsystems are connected together so that light signals are exchanged between them through optical fibers, as shown in Fig. 1. The optical extension cable 14 can be removed if the integral cable 16A of the optical transducer 16 is directly connected to the optoelectronic interrogator 12.

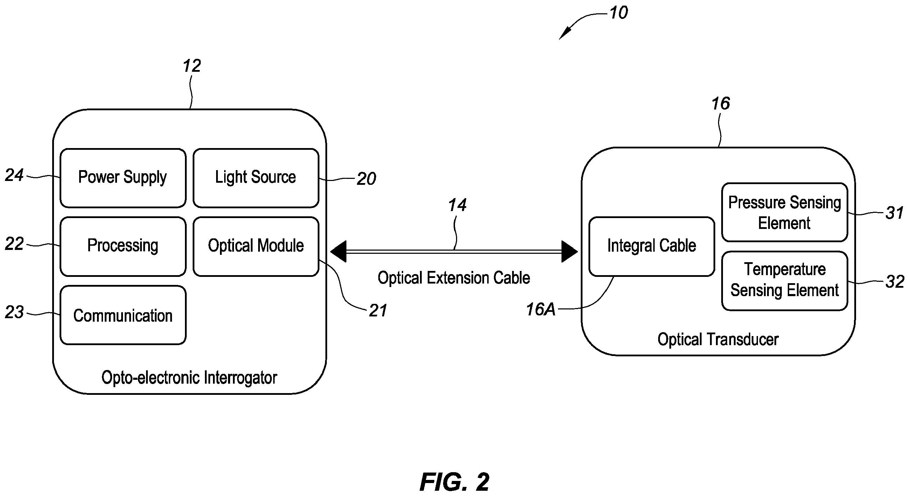

FIG. 2 illustrates the schematic view of an optical sensor 10 of Fig. 1 with the subcomponents of the optical interrogator and optical transducer shown. The optoelectronic interrogator 12 includes a light source 20, an optical module 21, a digital processing unit 22, a communication unit 23 and a power supply management unit 24. The optical extension cable 14 incorporates and protects at least two optical fibers, which connect the optoelectronic interrogator 12 to the optical transducer 16. The transducer 16 is composed of two sensing elements of pressure 31 and temperature 32. The sensing elements each include a Fabry-Perot interferometric cavity, which is sensitive to the measured physical parameters. Both elements are connected to optical fibers protected by an integral cable 33.

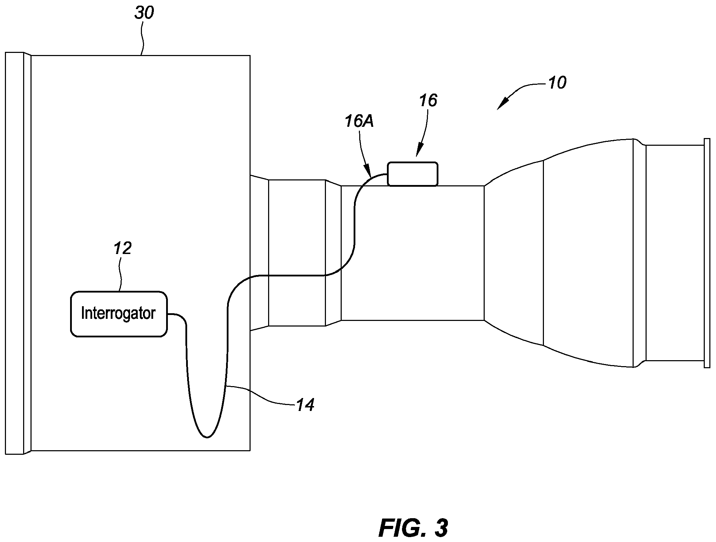

In a preferred embodiment, the system 10 is installed on an aircraft turbofan engine 30. FIG. 3 illustrates one embodiment of an optical sensor as described in Figs. 1 and 2 installed on a turbofan engine. The optoelectronic interrogator 12 is mounted on the exterior portion of the fan case of the engine 30, close to the other electronic units of the engine, where the temperature is reasonably cool on the engine (max temperature typically between 80°C to 125°C, or even hotter depending on the engine). The interrogator 12 is connected to the optical extension cable 14, which is routed to the engine hot zone, where the ambient temperature is typically comprised between 125°C to 250°C. The end of the optical extension cable 14 links to the optical transducer 16. The transducer 16 is installed on the engine core, in such a manner that it can sense the pressure and temperature of the engine air in the high pressure compressor, combustion chamber and turbine zones, where the temperatures can exceed 300°C or 400°C or even 500°C.

Although in Fig. 3, the transducer(s) is mounted on the engine core, in other embodiments the transducer(s) may be mounted in other locations. Typical transducer mounting locations could be, but are not limited to, locations where current pressure and temperature sensors are installed (the optical transducer would replace conventional pressure and temperature sensors in the above mentioned general areas). The transducer body 16 would typically be secured on engine mounting structures such as the compressor case (on the high pressure compressor side), the combustion case and/or the turbine case. The transducer head (zone beyond flange 40 until the end of radiation shield 43) would itself be immersed directly in the air flow via relevant piping or direct plug in the case.

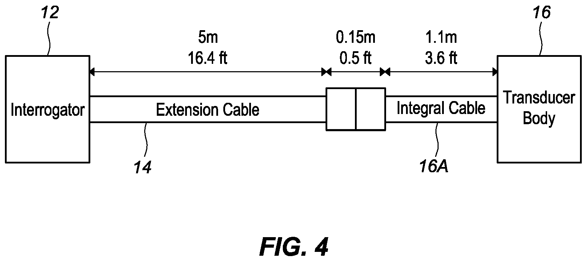

Fig. 4 illustrates some typical lengths of the system components in an optical sensor for a high bypass ratio turbofan engine. As may be appreciated, these dimensions are only for reference to a particular embodiment and other embodiments can use different lengths for the same type of engine or for different types of engines or other devices.

In operation, the interrogator 12 sends a light signal out to the optical transducer 16 through the optical extension cable 14 and 16A. The light is modulated as function of the applied external pressure by a Fabry-Perot cavity embedded in the pressure sensing element 16. The reflected light signal is analyzed by the optoelectronic interrogator 12. The pressure is then computed through the processing unit of the interrogator 12. The temperature is measured in a similar way and used to compensate the effect of temperature variations on the sensing elements. Both temperature and pressure data are then digitally output to other engine electronic units.

Optical Transducer Design

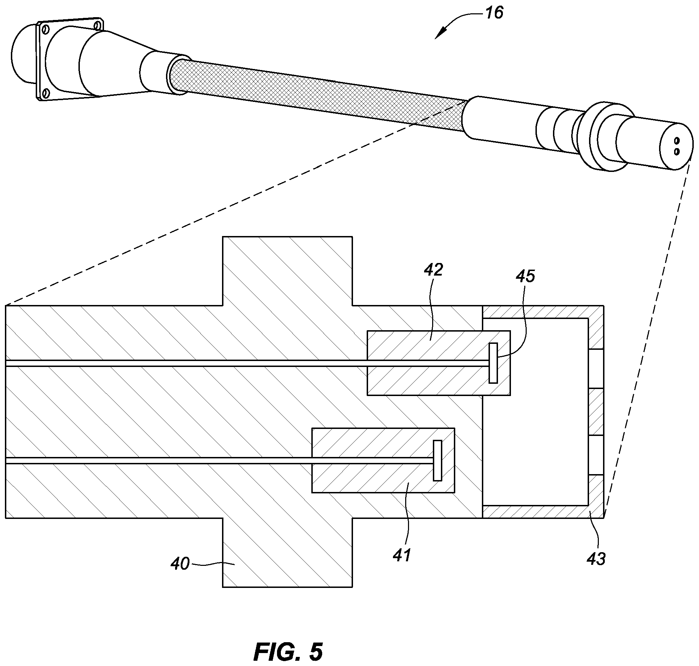

FIG. 5 illustrates a break out cross-section of one possible embodiment of an optical transducer 16 for use with the optical sensors 10 described herein. The optical transducer comprises the fiber optic Fabry-Perot temperature 41 and pressure 42 sensing elements. As may be seen in Fig. 5, both the temperature and pressure sensors 41 and 42 are located in the tip of the transducer 16. In the embodiment shown in Fig. 5, the pressure sensor 42 is located just in front of the temperature sensor 41. They are contained in compartments made in the hollowed-out body of the transducer tip. The Fabry-Perot temperature 41 and pressure 42 sensing elements each have a cavity 45.

In preferred embodiments, the sensing elements 41, 42 are made of a nickel-based superalloy showing a low coefficient of thermal expansion (CTE) and high mechanical resistance at environment temperature higher than 300°C. The housing 40 of the transducer 16 is preferably made of stainless steel (AISI 316L) or a nickel-based superalloy, depending on the application. A specific radiation shield 43 made of a nickel-based superalloy is assembled in the end of the transducer 16. During the fabrication process, a vacuum is applied to the inside volume of the housing 40 and an inert gas is introduced.

Extension Cable Design

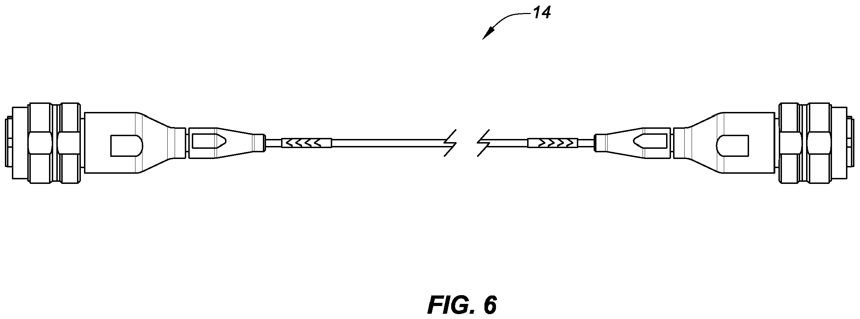

FIG. 6 illustrates a schematic view of an extension cable 14 for use with the optical sensors 10 taught herein. The optical extension cable 14 connects the optical transducer 16 and the opto-electronic interrogator 12. In preferred embodiments, the optical extension cable 14 incorporates two optical fibers and can accommodate an electrical wire, depending on the configuration of the system. The optical fiber is protected by a braided stainless steel layer and a PTFE layer. The braided stainless steel provides mechanical resistance. The connectors on each end are crimped to the braided stainless steel. The PTFE sleeve provides protection from all aggressive fluids. The optical fiber itself is therefore not subjected to any mechanical force and is not exposed to any contaminant. In order to work in preferred applications, the optical cable 14 must withstand temperatures beyond the temperature of its warmest end (i.e. connection to the optical transducer, typically 150°C to 250°C).

In preferred embodiments, and depending on the application, the optical extension cable is around 5 meters in length, with each connecter measuring around 79 mm in length. As will be appreciated by one skilled in the art, these dimensions can be changed without departing from the scope of the invention are provided as a reference embodiment only.

Optoelectronic Interrogator Design

The optoelectronic interrogator 12 is preferably designed to be a line replacement unit (LRU). In preferred embodiments, the optoelectronic interrogator 12 is designed to be installed on the fan case of an engine as shown in Fig. 3. In other embodiments, the optical interrogator electronic and optical modules (without packaging) can be implemented directly into an existing engine electronic unit (e.g. FADEC, EMU, etc.)

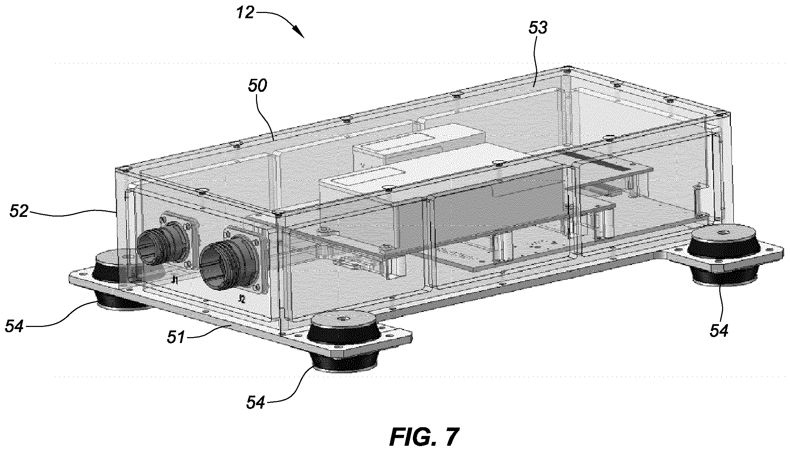

FIG. 7 illustrates an isometric view of one embodiment of an optoelectronic interrogator 12 with a transparent housing 50. The housing 50 of the interrogator is comprised of a chassis 51, a central frame 52 and a cover plate 53. In preferred embodiments, the entire housing 50 is made of black anodized aluminum alloy. In the embodiment shown in Fig. 7, the chassis 51 has four legs and mounting adaptors 54 which include bespoke shock absorbers for fixing the unit on the engine and damping the engine vibrations.

In some embodiments, the optical modules are hermitically sealed in metal or plastic boxes with a controlled internal atmosphere using air, vacuum or an inert gas. In other embodiments, the full optoelectronic interrogator box can be hermetically sealed.

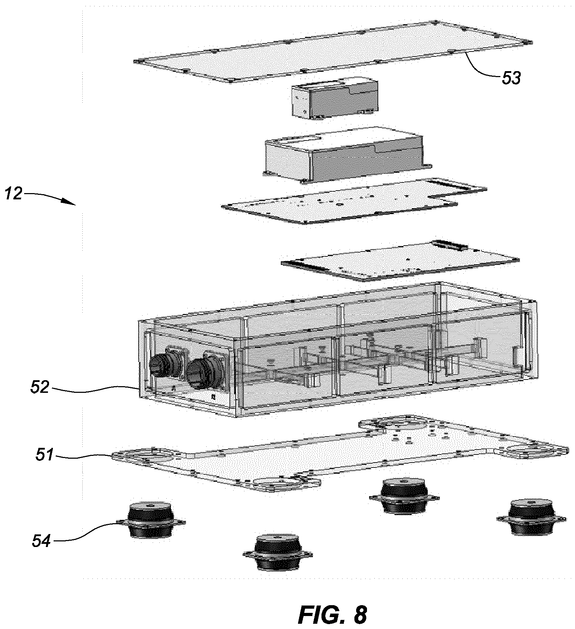

Fig. 8 illustrates an exploded view of the optoelectronic interrogator 12 of Fig. 7. In preferred embodiments of the optical interrogator 12, all electronic boards, connectors and optical modules are assembled on the central frame 52. In addition, in preferred embodiments, the central frame 52 is made of one piece. This architecture is particularly well adapted to high vibration environment and offers a great flexibility in the configuration of the system. For instance, an additional frame can be assembled on top of the first one, without compromising the system robustness. This configuration provides the flexibility to add functions or sensing channels to the systems, depending on the application requirements.

The interrogator 12 includes the light sources, the optical detection module, the multiplexing stage, the thermoregulation stage, the central processing module (CPM) electronic board and the optoelectronic interrogator module (OIM) electronic board.

In preferred embodiments, the optical detection module and the optical emission module are physically separated inside the interrogator 12. By "physically separate" it is meant at a minimum the two are mounted to different mounting base plates. In preferred embodiments, physically separate may mean mechanically isolated from one another using dampers or other mechanical isolation means.

Optical Modules

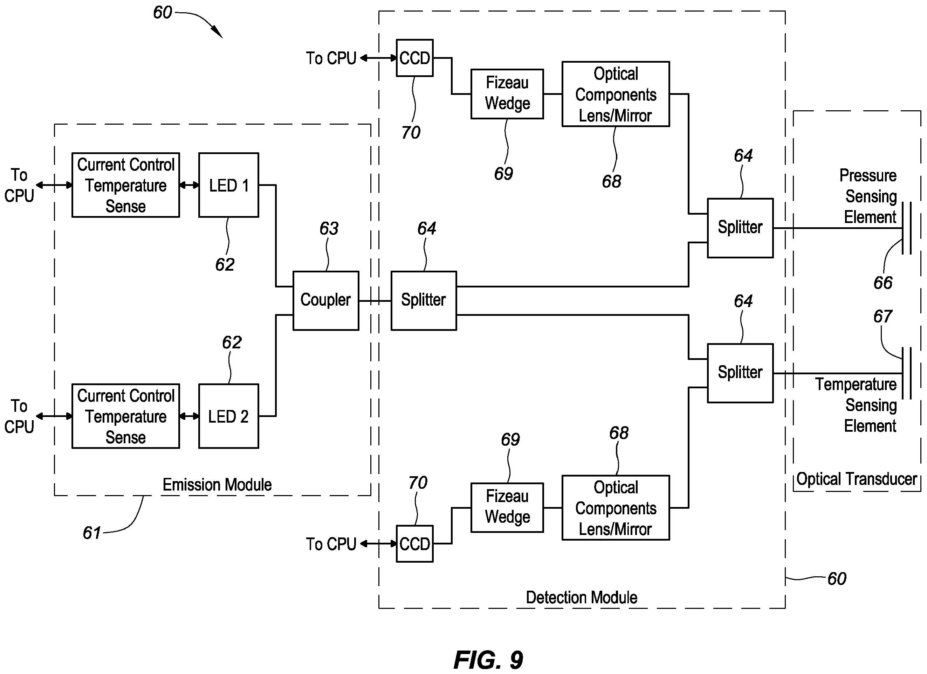

Fig. 9 illustrates a schematical view of an optical design and light path for one embodiment of an optical detection module 60 and an optical emissions module 61 for use with the optical interrogator 12 disclosed herein. The optical detection module 60 within the optical interrogator 12 consist of optical circuit assemblies enclosed in pressure tight boxes. The optical circuits are comprised of discrete passive optical components (and/or micro-optics elements) and optoelectronic components such as filament lamps, light emitting diodes (LED), super-luminescent LED (SLED), laser-diodes, vertical cavity surface emitting lasers (VCSEL), lasers, tunable lasers, supercontinuum lasers, photodiodes, charge coupled devices (CCD) image sensor and complementary metal-oxide-semiconductor (CMOS) image sensors. The optical and optoelectronic components are precisely aligned and fixed on a low thermal expansion base plate mounted on the base plate of the boxes. Optical fibers are coupled to the system for the external light communication. Alternatively, some or all functions of the discrete optical element can be integrated on a photonic integrated circuit (photonic chip).

The emission module 61 contains one or more LEDs 62, depending on the application. In a configuration including two LEDs 62, the central emission wavelengths are chosen to maximize the effect of destructive interferences, measured by the optical detection module 60. For example, in one embodiment the first LED may emit in the visible spectrum and the second LED may emit in the infrared spectrum. In other embodiments, other wavelengths may be used. The light emitted by the two or more LEDs is coupled in an optical fiber, using an optical coupler 63.

The optical detection module 60 has two main functions. The first one is to collect the light from the emission module 61 and divide it through an optical coupler or splitter 64, in order to distribute it to one or more transducers 66, 67. The second function is to collect the light signals reflected back from the Fabry-Perot cavities of the transducers 66, 67 and analyze it. This signal crosses the same optical splitter 64 as for the emission. However, the light is directed towards the optical analysis system 68 in this case. This optical analysis system 68 comprises a series of lenses and mirrors for shaping the light beam. In preferred embodiments, the mirrors and/or lenses in the optical path are designed to improve the uniformity of the distribution of light intensity across the Fizeau wedge 69.

The last optical element is a cylindrical mirror or lens which reflects a light line towards an optoelectronic detector 70. A Fizeau interferometer 69 is attached in front of the detector 70. This fixed and stable interferometer 69 has well-known characteristics, such that the size of the Fabry-Perot cavity of the transducers 66, 67 can be deduced by cross-correlation of the signal coming from the sensor and the own signature of the Fizeau interferometer 69.

Multiplexing

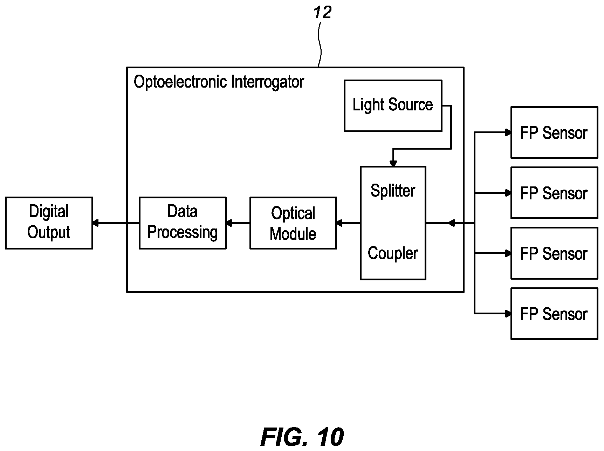

Fig. 10 illustrates a schematic view of how the system may use multiplexing to use a single interrogator 12 with multiple sensors. The design of the system provides the opportunity to measure one or more Fabry-Perot sensing elements. As described above, the system uses a single source module which can be split and sent to multiple sensors. This method enables the interrogation of multiple sensing elements with the same optoelectronics based on multiplexing method, such as time multiplexing, spatial multiplexing, and wavelength multiplexing.

Electronic Units

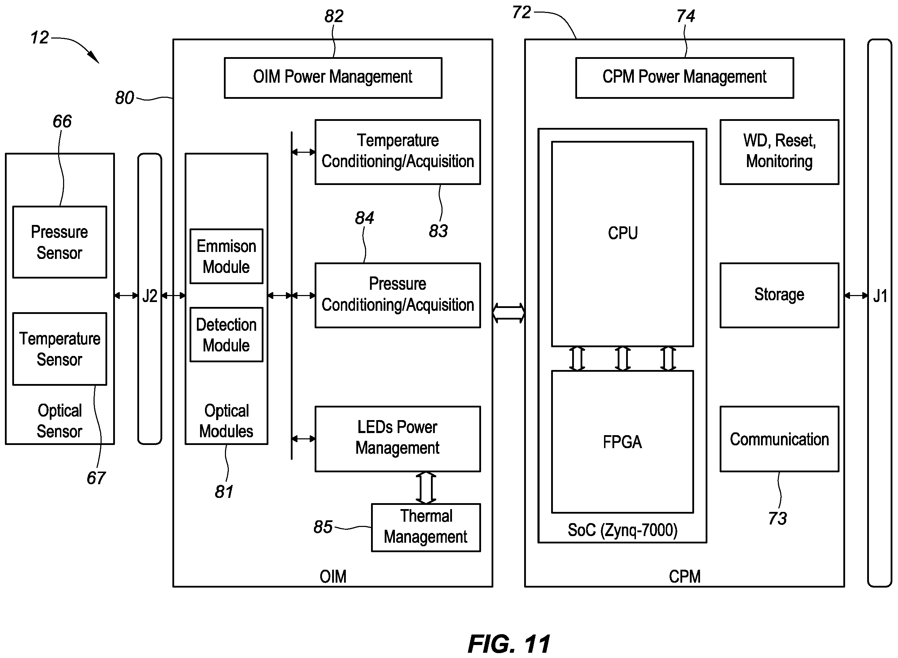

FIG. 11 illustrates a block diagram of one embodiment for an optoelectronic interrogator LRU that is sub-modularized according to the system needs. This is the electronic part of the interrogator This LRU is broken down into two sub-systems. The first sub-system is a standardized motherboard assembly 72, referred to as central processing module (CPM) 72, comprising: 1) a processing layer to host the software (SW) and programmable logics; 2) a communication layer to interface with other LRUs 73; 3) a configurable acquisition controller of the pressure and temperature data; 4) a power management and power conversion layer 74.

The second sub-system is the optoelectronic interrogator module (OIM) 80 comprising: 1) at least two optical modules 81; 2) configurable power supplies for light sources 82; 3) configurable acquisition interfaces of the pressure 83 and temperature 84 signals; 4) a thermal management layer 85.

The LRU may be alternatively modularized according to system requirements thanks to the modularity and scalability features of the system. For instance, an additional acquisition module can be included for extended acquisition capabilities without modifying the existing sub-systems or housing parts.

Central Processing Module (CPM)

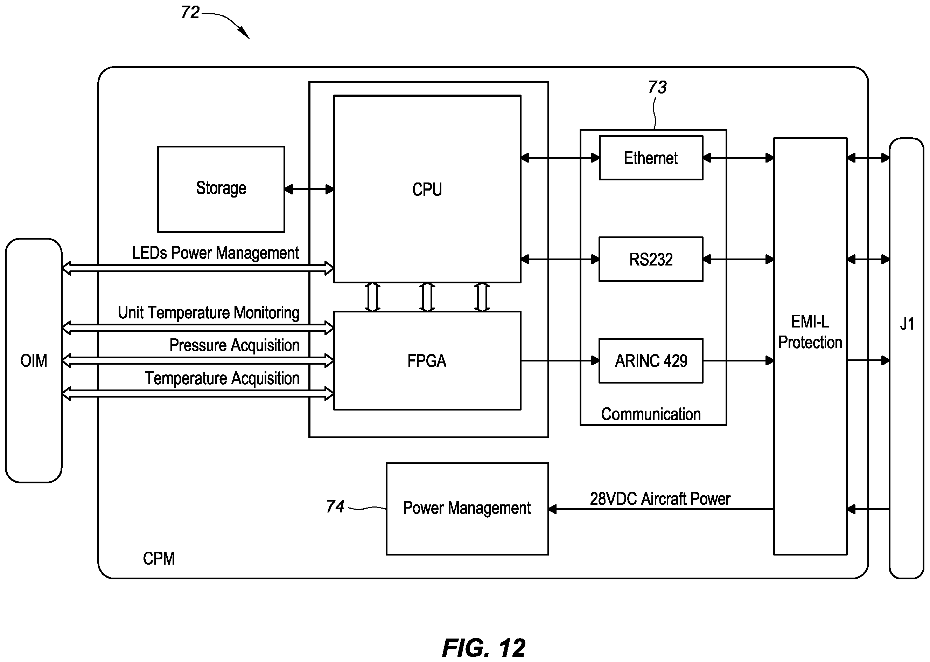

FIG. 12 illustrates a block diagram of one embodiment of an architecture for a CPM 72. At the heart of the CPM 72 is an all programmable system on a chip (SoC) which includes a central processing unit (CPU) to host a specific SW application, and a programmable logic (or FPGA) to achieve high flexibility by providing the ability to connect to a multitude of different peripherals though only a reprogramming.

The CPU and programmable logic provide the processing for the system as well as the functionality to support the various communication interfaces. Alternatively, all the processing functions of the CPM can also be handled with a FPGA without the use of a CPU.

A communication layer is provided to allow communication with other LRUs or ground stations. In the present embodiment, the LRU provides ARINC-429, Ethernet and RS-232 interfaces. Alternative and additional interfaces (e.g. CAN, RS-422, RS-485,...) can be provided by replacement of a line-removable sub-module of the CPM 72.

In a preferred embodiment, the CPM 72 includes a mezzanine connector which provides communication, control and feedback signals available to any other sub-systems of the LRU thus providing a very modular structure. In the present embodiment, these internal signals are used to program and control the acquisition of the pressure and temperature signals and control the thermal management of the system. The CPM 72 also includes a power management layer 74 to interface with the aircraft power input and provide stabilized power supplies to the other sub-systems of the LRU.

Optical Interrogator Module (OIM)

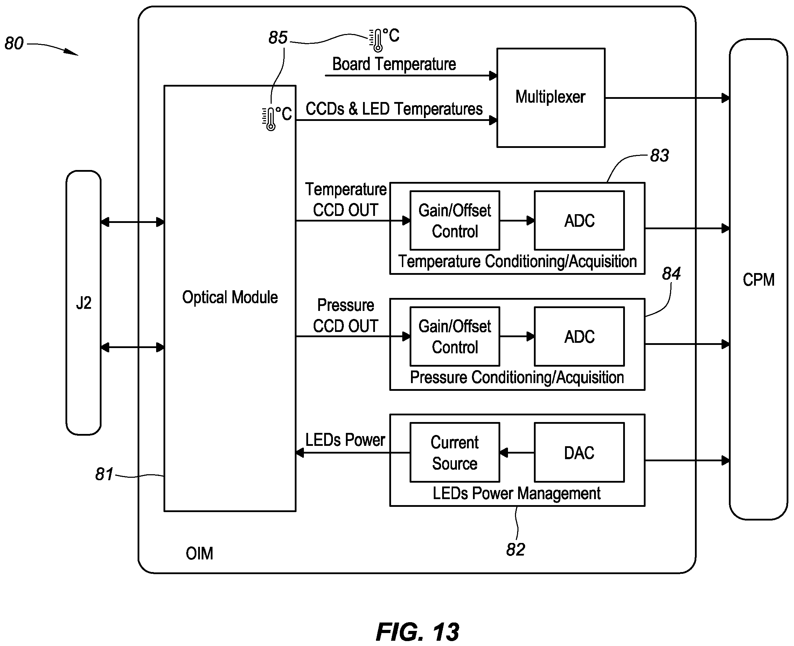

FIG. 13 illustrates a block diagram of one embodiment of an OIM 80 architecture. The OIM 80 in Fig. 13 comprises: conditioning and acquisition interfaces of the pressure 84 and temperature 83 signals coming from the optical detection module 81. It enables an independent control by the CPM 72 of the acquisition parameters of each input signals. This includes an independent control of the gain and sampling frequency of each individual channel. Two independent current sources provide the power for the light sources of the optical emission module 81. A dynamic adjustment by the CPM 72 of the current supplied to each source is done as a function of internal parameters, such as the temperature of internal components or the actual light intensity received on the optical detection module 81. Multiple temperature sensors 85 are also provided to monitor and report the temperature values of various system components to the CPM 72. This temperature data can include board temperature, CCD temperature, LED temperature and any other temperature data in the OIM 80 that would be helpful for the CPM 72. The temperature data from the OIM 80 can be used to further compensate for potential variation of the components, when exposed to temperatures different than room temperature.

Thermal Regulation Design

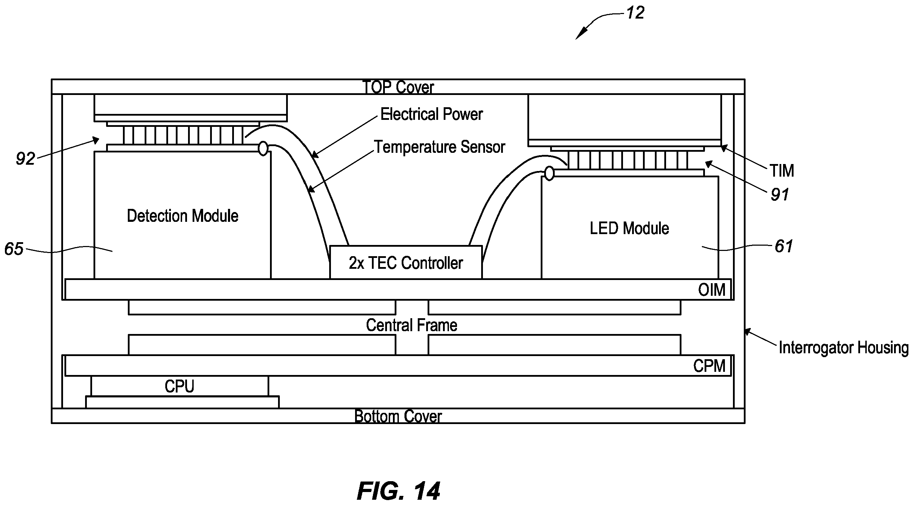

To mitigate the variation of characteristics of the optical elements due to temperature, in particular the loss of optical power at high temperature, a temperature management layer is implemented in the OIM 80. It consists of an active temperature control of the optical modules. The temperatures of the optical emission and detection modules are measured by temperature sensors and controlled by thermo-electric regulators. Fig. 14 illustrates a schematic of one embodiment of a temperature control layer 85 for the OIM 80. The cooling or heating of the optical element is achieved using thermoelectric coolers 91, 92 (TEC or Peltier element). A TEC 91 is attached to the optical emission module 61 and another TEC 92 to the optical detection module 65 to pump the heat from the devices and reject it to a heat sink. The LRU housing 50 is used to absorb the heat and act as the heat sink so that the heat is rejected outside the LRU. This embodiment is thus preferred to the use of standard heat sinks placed inside the LRU as those would lead to a more significant increase of the internal temperature. Conversely the TEC's 91, 92 can be used to heat the modules if required. Thermal sensors are attached to the modules to provide measurements of the modules temperature which allow TEC controllers to adjust the power supplied to the TEC 91, 92 as a function of the temperatures. The information of the temperature of the optoelectronic elements (if not or partially thermo-regulated) can be further used to compensate from thermal effect/shift on the output signals, during the digital processing of the data.

Signal Processing

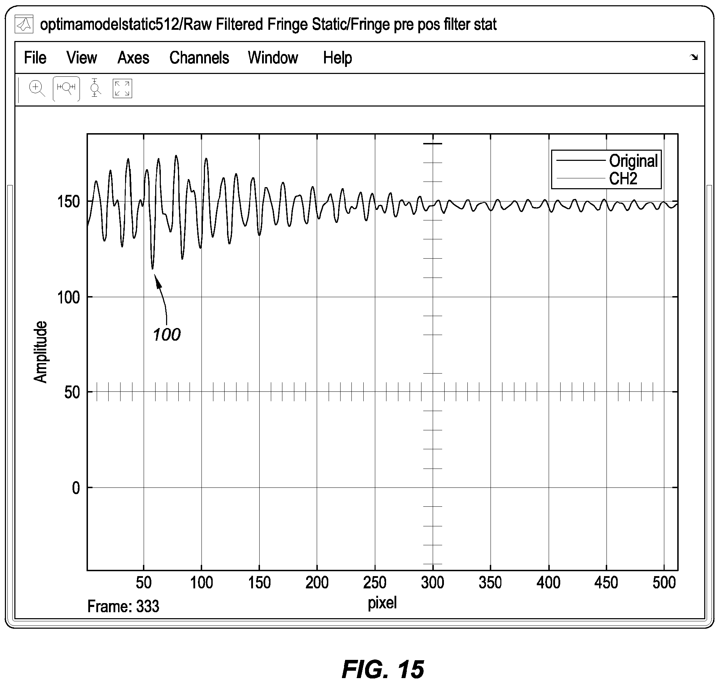

The minimum position of fringe interferences read by the optical detector is directly correlated with the dimension of the Fabry-Perot cavity of the transducer. The pressure and temperature stimuli to which it has been exposed may then be reconstructed from this information. The processing goal is to identify the maximum destructive interference signal. Fig. 15 illustrates an expected fringe interference pattern with the maximum destructive interference point on the pattern identified.

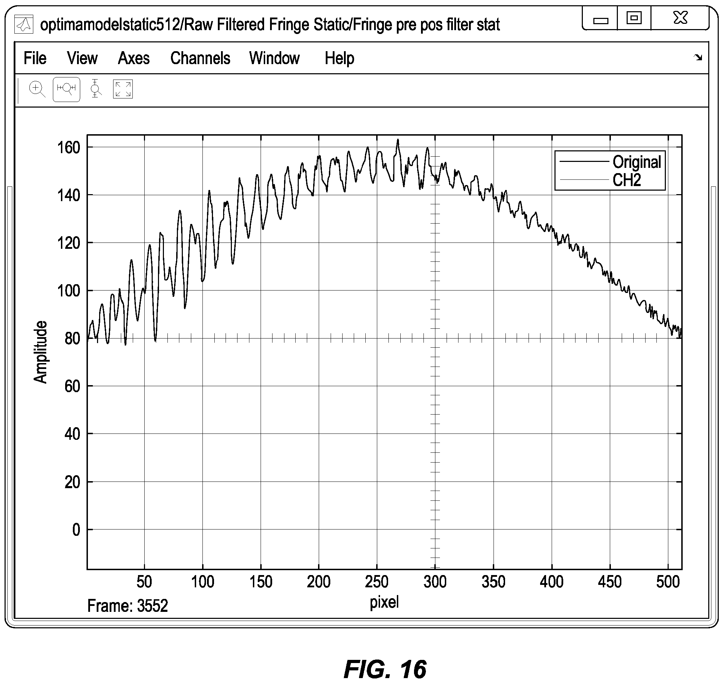

Interference is not the only actor to determine the shape of the signal. Two other effects could affect the shape of the signal. Fig. 16 illustrates a fringe interference pattern with: (i) geometrical and optical fiber effects which bring a "bell" modulation over the fringe shape and (ii) electro-optical noise. Both effects need to be removed or compensated, in order to perform the detection correctly.

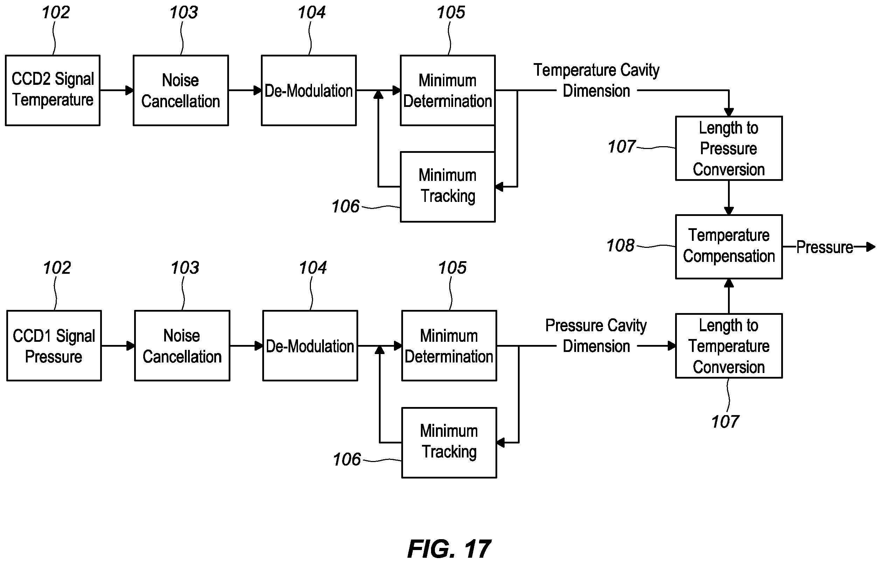

Fig. 17 illustrates a block diagram of an example of system signal processing to compute and compensate for a pressure measurement. The inputs to the process are the optical interference signals acquired by the optical detectors 102, one per channel (e.g. temperature and pressure). The intermediate output blocks 103-106 is the measurement of the dimensions of the two cavities. As previously explained, these are sent to the respective conversion blocks 107 to produce a measurement of temperature and a first estimation of pressure. This estimation is then converted to the final value within the temperature correction block 108. The noise cancellation block consists of a low pass frequency FIR filter. The low pass cutoff frequency is correlated with the interference pattern fringes period. The Bell Demodulation consists of a high pass filter implemented through an averaging subtraction. The size of averaging is determined by the interference pattern fringes period.

The point of maximum destructive interference (minimum of the fringe signal) is determined on the filtered/demodulated signal. The search strategy consists on a local minimum searched centered on time-tracked position. Erroneous minimum finding (e.g. noise peak on local extrema) is mitigated by implementing a minimum hopping strategy controlled by threshold annealing. Once identified, a pixel position standard parabolic sub-pixel interpolation is implemented to improve the accuracy of the result.

Once the pixel minimum position (referred as pixel index) is determined with subpixel accuracy, it is converted into nanometers representing the dimensions of the corresponding Fabry-Perot cavity, using the Fizeau wedge lookup table determined by anterior calibration. Other lookup tables representing the physical properties of the cavities as a function of temperature (thermal coefficients and membrane sensitivity) allow the conversion from cavity dimension into a pressure measurement 107.

To these ends, a processor uses a numerical method to measure the dimension of each of the two Fabry-Perot cavities by detecting the maximum of the destructive interference pattern produced along each of the two optical circuits. The processor, detects and tracks the maximum of the destructive interference pattern based on pixel intensity of a linear or matrix photo-detectors and produced by the optical circuit. The method combines the interference peak information with the geometry of Fizeau interferometer to compute a Fabry-Perot cavity dimension. The processor further can convert the second Fabry-Perot cavity dimension into temperature using the physical properties of the second Fabry-Perot cavity. The first Fabry-Perot cavity dimension is converted into the measured physical parameter (e.g. pressure) using the physical properties of the first cavity and temperature measurement of the second cavity.

In other embodiments, the processor calculates the Fast Fourier Transform (FFT) of the interference spectrum to determine the change of dimension of a Fabry-Perot interferometer.

In some embodiments, the processor uses a numerical method to compute and analyze the FFT of the spectrum of the fringe pattern and balance the intensity of the two light sources across the temperature range. The FFT information the interference pattern can be additionally used to continuously determine the integrity of the optical circuit (built in test - BIT).

Finally, in some embodiments, the system is calibrated in such a manner that the interrogator and transducers are interchangeable. The interrogator is calibrated to measure Fabry-Perot cavity dimensions independently of the transducer. The transducer physical parameters are stored in the interrogator to convert the Fabry-Perot cavity dimension into the measured physical parameters (e.g. pressure).

Optoelectrical Component Control

A control of balancing of light sources and CCDs levels has been introduced to improve measurement capabilities. If the control cannot achieve a predefined condition a fault signal is transmitted to a BIT (Built-In Test) block. The BIT will detect and classify different faults in the optical circuit such as Temperature or Pressure CCD saturation, Temperature or Pressure CCD low signal, low level of source 1 or source 2 or any other source.

First the system verifies that the CCDs are working properly, by analyzing the values of pixel levels. Saturation and low light level conditions are determined respectively on the basis of max and average pixel values. In case of saturation the integration time of CCDs is decreased until the saturation disappears. In case of low light levels, the integration time of the CCDs is increased until the average level reaches the acceptance condition. If such conditions cannot be reached, a signal is sent to the BIT.

When, and if, a CCD is working in the predefined acceptance range, its signal will be analyzed independently. For each CCD, the interference signal is Fourier transformed and two local peaks in the spectrum will be identified. Each local peak corresponds to the contribution of the individual light sources. Local peak detection acts in a range centered on a frequency F determined by the corresponding source peak wavelength $\lambda$ the slope of the Fizeau interferometer $\alpha$ and the CCD pixel size $P_{size}$

$$F = tg(\alpha)* P_{size}/ \lambda$$

For each CCD, if the two peak values have a difference lower than a predefined threshold, this means the source levels are well balanced. If this is not true, the current to the source corresponding to the weaker peak will be increased and the current to the source corresponding to the stronger peak decreased until the two peaks levels reach the predefined acceptable level. If the acceptable level cannot be reached, a signal will be sent to BIT

Although in general, this patent document has exclusively discussed the use of a Fabry-Perot interferometers, other sensors may be used. For example, Fiber Bragg Grating (FBG) based sensors may be used.

Although the various inventive aspects are herein disclosed in the context of certain preferred embodiments, implementations, and examples, it will be understood by those skilled in the art that the present invention extends beyond the specifically disclosed embodiments to other alternative embodiments and/or uses of the invention and obvious modifications and equivalents thereof. In addition, while a number of variations of the inventive aspects have been shown and described in detail, other modifications, which are within their scope will be readily apparent to those of skill in the art based upon this disclosure. It should be also understood that the scope of this disclosure includes the various combinations or sub-combinations of the specific features and aspects of the embodiments disclosed herein, such that the various features, modes of implementation, and aspects of the disclosed subject matter may be combined with or substituted for one another. Thus, it is intended that the scope of the present invention herein disclosed should not be limited by the particular disclosed embodiments or implementations described above, but should be determined only by a fair reading of the claims.

Similarly, this disclosure is not be interpreted as reflecting an intention that any claim require more features than are expressly recited in that claim. Rather, as the following claims reflect, inventive aspects lie in a combination of fewer than all features of any single foregoing disclosed embodiment. Thus, the claims following the Detailed Description are hereby expressly incorporated into this Detailed Description, with each claim standing on its own as a separate embodiment.

Further, all claim terms should be interpreted in their most expansive forms so as to afford the applicant the broadest coverage legally permissible. Although the embodiments have been described with reference to the drawings and specific examples, it will readily be appreciated by those skilled in the art that many modifications and adaptations of the processes, methods and apparatuses described herein are possible without departure from the scope of the claims. Thus, it is to be clearly understood that this description is made only by way of example and not as a limitation on the scope of the claims below.

**Claims**

1. An optoelectronic system (10) for measuring physical parameters comprising:

    an optical sensor (16) with a transducer tip, the optical sensor comprising:

       a first Fabry-Perot interferometer (41) located in the transducer tip and arranged to receive a first portion of a combined light wherein the first Fabry-Perot interferometer (41) is exposed to temperature and a second physical parameter; and
       a second Fabry-Perot interferometer (42) located in the transducer tip and arranged to receive a second portion of the combined light wherein the second Fabry-Perot interferometer (42) is exposed to temperature and not exposed to the second physical parameter;

    an interrogator (12) in optical communication with the optical sensor (16), the interrogator (12) comprising:

       a first narrow band light source (62) with a first peak frequency;
       a second narrow band light source (62) with a second peak frequency different from the first peak frequency;
       a coupler (63) arranged to couple the first narrow band light source (62) with the second narrow band light source (62) into the combined light;
       a first splitter (64) arranged to split the combined light into the first portion and the second portion;
       a first Fizeau interferometer (69) arranged to receive light reflected from a first cavity (45)

    of the first Fabry-Perot interferometer (42) through an optical path comprising a lens or a mirror to a first optical detector (70);

       a second Fizeau interferometer (69) arranged to receive light reflected from a second cavity (45) of the second Fabry-Perot interferometer (69) through an optical path comprising a lens or a mirror to a second optical detector (70); and
       a processor arranged to analyze the data received by the first optical detector (70) and second optical detector (70) and calculate a value for temperature and the second physical parameter.

2. The optoelectronic system (10) of claim 1, wherein the physical parameter is pressure.

3. The optoelectronic system (10) of claim 1 or claim 2, wherein the first light source (62) and second light source (62) are part of an emissions module (61) that is physically separate from the first Fizeau interferometer (69), the second Fizeau interferometer (69), the first optical detector (70) and the second optical detector (70), which all reside on a detection module (65).

4. The optoelectronic system (10) of any of the preceding claims, wherein the first Fizeau interferometer (69), the second Fizeau interferometer, the first optical sensor (70) and the second optical sensor (70), are all mounted on a plate (69) made from a material with a coefficient of thermal expansion below 2 x 10-6 /°C.

5. The optoelectronic system (10) of any of the preceding claims wherein the optical sensor (16) is mounted to an engine core.

6. The optoelectronic system (10) of claim 5, wherein the interrogator (12) is mounted to a fan case of a turbofan engine and in optical communication with the optical sensor (16) via at least one optical fiber (14).

7. A method of detecting a physical parameter in a harsh environment using an optical sensor (16) comprising:

    coupling a first narrow band light source (62) having a first peak frequency with a second narrow band light source (62) with a second peak frequency different from the first peak frequency to create a combined light;
    splitting the combined light with a first splitter (64) into a first portion of the combined light and a second portion of the combined light;
    receiving the first portion of the combined light in a first Fabry-Perot interferometer (41) located in a tip of the optical sensor (16);
    exposing the first Fabry-Perot interferometer (41) to temperature and a second physical parameter;
    receiving the second portion of the combined light in a second Fabry-Perot interferometer (42) located in the tip of the optical sensor (16);
    exposing the second Fabry-Perot interferometer (42) to temperature but not the second physical parameter;
    receiving light reflected from a first cavity of the first Fabry-Perot interferometer (41) into a first optical detector (70) through an optical path comprising a lens or a mirror and a first Fizeau interferometer (69);

receiving light reflected from a second cavity of the second Fabry-Perot interferometer (42) into a second optical detector (70) through an optical path comprising a lens or a mirror and a second Fizeau interferometer (69); and

analyzing the data received by the first optical detector (70) and second optical detector (70) to calculate a value for temperature and the second physical parameter.

8. The method of claim 7, wherein the physical parameter is pressure.

9. The method of claim 7 or claim 8, further comprising calculating a Fourier Transform of an interference spectrum to determine a change of dimension of a first cavity (45) of the first Fabry-Perot interferometer (41).

10. The method of claim 7 or claim 8, further comprising using a numerical method to measure a first dimension of a first cavity (45) of the first Fabry-Perot interferometer (41) and to measure a second dimension of a second cavity (45) of the second Fabry-Perot interferometer (42) by detecting a maximum of the destructive interference pattern produced along a first optical circuit and a second optical circuit.

11. The method of claim 10, further comprising using a numerical method to detect and track the maximum of the destructive interference pattern based on pixel intensity of a linear or matrix photo-detector wherein interference peak information is combined with geometry of the first Fizeau interferometer and second Fizeau interferometer to compute the first dimension and the second dimension.

12. The method of claim 10, further comprising converting the second dimension into a temperature measurement using physical properties of the second cavity (45) and converting the first dimension into the measured physical parameter using physical properties of the first cavity and the temperature measurement.

13. The method of any of claims 10 to 12, further comprising using simulated annealing search or sub-pixel interpolation to detect and track a peak of destructive interference.

14. The method of any of claims 10 to 13, further comprising computing and analyzing a Fourier Transform of an interference spectrum of a fringe pattern and balancing an intensity of the first narrow band light sources and the second narrow band light source across a temperature range.

15. The method of any of claims 10 to 14 further comprising calibrating the interrogator (12) to measure a cavity dimension of the first Fabry-Perot interferometer (41) independently of the second Fabry-Perot interferometer (42).

**Patentansprüche**

1. Optoelektronisches System (10) zum Messen von physikalischen Parametern, das Folgendes umfasst:

einen optischen Sensor (16) mit einer Wandlerspitze, wobei der optische Sensor Folgendes umfasst:

ein erstes Fabry-Perot-Interferometer (41), das sich in der Wandlerspitze befindet und so angeordnet ist, dass es einen ersten Teil eines kombinierten Lichts empfängt, wobei das erste Fabry-Perot-Interferometer (41) der Temperatur und einem zweiten physikalischen Parameter ausgesetzt ist; und ein zweites Fabry-Perot-Interferometer (42), das sich in der Wandlerspitze befindet und so angeordnet ist, dass es einen zweiten Teil des kombinierten Lichts empfängt, wobei das zweite Fabry-Perot-Interferometer (42) der Temperatur und nicht dem zweiten physikalischen Parameter ausgesetzt ist;

ein Abfragevorrichtung (12) in optischer Verbindung mit dem optischen Sensor (16), wobei die Abfragevorrichtung (12) Folgendes umfasst:

eine erste Schmalbandlichtquelle (62) mit einer ersten Spitzenfrequenz; eine zweite Schmalbandlichtquelle (62) mit einer zweiten Spitzenfrequenz, die sich von der ersten Spitzenfrequenz unterscheidet; einen Koppler (63), der so angeordnet ist, dass er die erste Schmalbandlichtquelle (62) mit der zweiten Schmalbandlichtquelle (62) in das kombinierte Licht koppelt; einen ersten Splitter (64), der so angeordnet ist, dass er das kombinierte Licht in den ersten Teil und den zweiten Teil aufteilt; ein erstes Fizeau-Interferometer (69), das so angeordnet ist, dass es Licht empfängt, das von einem ersten Hohlraum (45) des ersten Fabry-Perot-Interferometers (42) durch einen optischen Pfad, der eine Linse oder einen Spiegel umfasst, zu einem ersten optischen Detektor (70) reflektiert wird; ein zweites Fizeau-Interferometer (69), das so angeordnet ist, dass es Licht empfängt, das von einem zweiten Hohlraum (45) des zweiten Fabry-Perot-Interferometers (69) durch einen optischen Pfad, der eine Linse oder einen Spiegel umfasst, zu einem zweiten optischen Detektor (70) reflektiert wird; und

einen Prozessor, der so angeordnet ist, dass er die von dem ersten optischen Detektor (70) und dem zweiten optischen Detektor (70) empfangenen Daten analysiert und einen Wert für die Temperatur und den zweiten physikalischen Parameter berechnet.

2. Optoelektronisches System (10) nach Anspruch 1, wobei der physikalische Parameter der Druck ist.

3. Optoelektronisches System (10) nach Anspruch 1 oder Anspruch 2, wobei die erste Lichtquelle (62) und die zweite Lichtquelle (62) Teil eines Emissionsmoduls (61) sind, das physikalisch von dem ersten Fizeau-Interferometer (69), dem zweiten Fizeau-Interferometer (69), dem ersten optischen Detektor (70) und dem zweiten optischen Detektor (70) getrennt ist, die sich alle auf einem Detektionsmodul (65) befinden.

4. Optoelektronisches System (10) nach einem der vorhergehenden Ansprüche, wobei das erste Fizeau-Interferometer (69), das zweite Fizeau-Interferometer, der erste optische Sensor (70) und der zweite optische Sensor (70) alle auf einer Platte (69) montiert sind, die aus einem Material mit einem Wärmeausdehnungskoeffizienten von weniger als $2 \times 10^{-6}$ /°C hergestellt ist.

5. Optoelektronisches System (10) nach einem der vorhergehenden Ansprüche, wobei der optische Sensor (16) an einem Motorkern angebracht ist.

6. Optoelektronisches System (10) nach Anspruch 5, wobei die Abfragevorrichtung (12) an einem Gebläsegehäuse eines Mantelstromtriebwerks angebracht ist und über mindestens eine optische Faser (14) in optischer Verbindung mit dem optischen Sensor (16) steht.

7. Verfahren zum Erfassen eines physikalischen Parameters in einer rauen Umgebung unter Verwendung eines optischen Sensors (16), wobei das Verfahren Folgendes umfasst:

Koppeln einer ersten Schmalbandlichtquelle (62), die eine erste Spitzenfrequenz aufweist, mit einer zweiten Schmalbandlichtquelle (62), die eine zweite Spitzenfrequenz aufweist, die sich von der ersten Spitzenfrequenz unterscheidet, um ein kombiniertes Licht zu erzeugen;

Aufteilen des kombinierten Lichts mit einem ersten Splitter (64) in einen ersten Teil des kombinierten Lichts und einen zweiten Teil des kombinierten Lichts;

Empfangen des ersten Teils des kombinierten Lichts in einem ersten Fabry-Perot-Interferometer (41), das sich in einer Spitze des optischen Sensors (16) befindet;

Aussetzen des ersten Fabry-Perot-Interferometers (41) gegenüber der Temperatur und einem zweiten physikalischen Parameter;

Empfangen des zweiten Teils des kombinierten Lichts in einem zweiten Fabry-Perot-Interferometer (42), das sich in der Spitze des optischen Sensors (16) befindet;

Aussetzen des zweiten Fabry-Perot-Interferometers (42) gegenüber der Temperatur, aber nicht gegenüber dem zweiten physikalischen Parameter;

Empfangen von Licht, das von einem ersten Hohlraum des ersten Fabry-Perot-Interferometers (41) reflektiert wird, in einem ersten optischen Detektor (70) durch einen optischen Pfad, der eine Linse oder einen Spiegel und ein erstes Fizeau-Interferometer (69) umfasst;

Empfangen von Licht, das von einem zweiten Hohlraum des zweiten Fabry-Perot-Interferometers (42) reflektiert wird, in einem zweiten optischen Detektor (70) durch einen optischen Pfad, der eine Linse oder einen Spiegel und ein zweites Fizeau-Interferometer (69) umfasst; und

Analysieren der von dem ersten optischen Detektor (70) und dem zweiten optischen Detektor (70) empfangenen Daten, um einen Wert für die Temperatur und den zweiten physikalischen Parameter zu berechnen.

8. Verfahren nach Anspruch 7, wobei der physikalische Parameter der Druck ist.

9. Verfahren nach Anspruch 7 oder 8, das ferner das Berechnen einer Fourier-Transformation eines Interferenzspektrums umfasst, um eine Änderung der Dimension eines ersten Hohlraums (45) des ersten Fabry-Perot-Interferometers (41) zu bestimmen.

10. Verfahren nach Anspruch 7 oder Anspruch 8, das ferner das Verwenden eines numerischen Verfahrens umfasst, um eine erste Abmessung eines ersten Hohlraums (45) des ersten Fabry-Perot-Interferometers (41) zu messen und eine zweite Abmessung eines zweiten Hohlraums (45) des zweiten Fabry-Perot-Interferometers (42) zu messen, indem ein Maximum des destruktiven Interferenzmusters erfasst wird, das entlang einer ersten optischen Schaltung und einer zweiten optischen Schaltung erzeugt wird.

**11.** Verfahren nach Anspruch 10, das ferner das Verwenden eines numerischen Verfahrens zum Erfassen und Verfolgen des Maximums des destruktiven Interferenzmusters basierend auf der Pixelintensität eines linearen oder Matrix-Photodetektors umfasst, wobei Interferenzspitzeninformationen mit der Geometrie des ersten Fizeau-Interferometers und des zweiten Fizeau-Interferometers kombiniert werden, um die erste Dimension und die zweite Dimension zu berechnen.

**12.** Verfahren nach Anspruch 10, das ferner Folgendes umfasst: Umwandeln der zweiten Dimension in eine Temperaturmessung unter Verwendung physikalischer Eigenschaften des zweiten Hohlraums (45) und Umwandeln der ersten Dimension in den gemessenen physikalischen Parameter unter Verwendung physikalischer Eigenschaften des ersten Hohlraums und der Temperaturmessung.

**13.** Verfahren nach einem der Ansprüche 10 bis 12, das ferner das Verwenden einer Glühsimulationssuche oder Sub-Pixel-Interpolation umfasst, um eine Spitze der destruktiven Interferenz zu erfassen und zu verfolgen.

**14.** Verfahren nach einem der Ansprüche 10 bis 13, das ferner Folgendes umfasst: Berechnen und Analysieren einer Fourier-Transformation eines Interferenzspektrums eines Streifenmusters und Ausgleichen einer Intensität der ersten Schmalbandlichtquellen und der zweiten Schmalbandlichtquelle über einen Temperaturbereich.

**15.** Verfahren nach einem der Ansprüche 10 bis 14, das ferner das Kalibrieren der Abfragevorrichtung (12) umfasst, um eine Hohlraumabmessung des ersten Fabry-Perot-Interferometers (41) unabhängig von dem zweiten Fabry-Perot-Interferometer (42) zu messen.

**Revendications**

**1.** Système optoélectronique (10) de mesure de paramètres physiques comprenant :
un capteur optique (16) avec une pointe de transducteur, le capteur optique comprenant :

un premier interféromètre Fabry-Pérot (41) situé dans la pointe du transducteur et agencé pour recevoir une première partie d'une lumière combinée dans lequel le premier interféromètre Fabry-Pérot (41) est exposé à la température et à un deuxième paramètre physique ; et
un deuxième interféromètre Fabry-Pérot (42) situé dans la pointe du transducteur et agencé pour recevoir une deuxième partie de la lumière combinée dans lequel le deuxième interféromètre Fabry-Pérot (42) est exposé à la température et non exposé au deuxième paramètre physique ;
un interrogateur (12) en communication optique avec le capteur optique (16), l'interrogateur (12) comprenant :

une première source lumineuse à bande étroite (62) avec une première fréquence de crête ;
une deuxième source lumineuse à bande étroite (62) avec une deuxième fréquence de crête différente de la première fréquence de crête ;
un coupleur (63) agencé pour coupler la première source lumineuse à bande étroite (62) avec la deuxième source lumineuse à bande étroite (62) dans la lumière combinée ;
un premier diviseur (64) agencé pour diviser la lumière combinée en la première partie et la deuxième partie ;
un premier interféromètre Fizeau (69) agencé pour recevoir la lumière réfléchie depuis une première cavité (45) du premier interféromètre Fabry-Pérot (42) à travers un chemin optique comprenant une lentille ou un miroir vers un premier détecteur optique (70) ;
un deuxième interféromètre Fizeau (69) agencé pour recevoir la lumière réfléchie depuis une deuxième cavité (45) du deuxième interféromètre Fabry-Pérot (69) à travers un chemin optique comprenant une lentille ou un miroir vers un deuxième détecteur optique (70) ; et
un processeur agencé pour analyser les données reçues par le premier détecteur optique (70) et le deuxième détecteur optique (70) et calculer une valeur pour la température et le deuxième paramètre physique.

**2.** Système optoélectronique (10) selon la revendication 1, dans lequel le paramètre physique est la pression.

**3.** Système optoélectronique (10) selon la revendication 1 ou 2, dans lequel la première source lumineuse (62) et la deuxième source lumineuse (62) font partie d'un module d'émission (61) qui est physiquement distinct du premier interféromètre Fizeau (69), du deuxième interféromètre Fizeau (69), du premier détecteur optique (70) et du deuxième détecteur optique (70), qui se situent tous sur un module de détection (65).

**4.** Système optoélectronique (10) selon l'une quelconque des revendications précédentes, dans lequel le premier interféromètre Fizeau (69), le deuxième interféromètre Fizeau, le premier capteur optique (70) et le deuxième capteur optique (70), sont tous montés sur un plaque (69) fabriquée d'un matériau à coefficient de dilatation thermique inférieur à 2 x 10-6 /°C.

**5.** Système optoélectronique (10) selon l'une quelconque des revendications précédentes, dans lequel le capteur optique (16) est monté sur un noyau de moteur.

**6.** Système optoélectronique (10) selon la revendication 5, dans lequel l'interrogateur (12) est monté sur un carter de soufflante d'un turboréacteur et en communication optique avec le capteur optique (16) via au moins une fibre optique (14).

**7.** Procédé de détection d'un paramètre physique dans un environnement hostile en utilisant un capteur optique (16) comprenant :

le couplage d'une première source lumineuse à bande étroite (62) ayant une première fréquence de crête avec une deuxième source lumineuse à bande étroite (62) avec une deuxième fréquence de crête différente de la première fréquence de crête pour créer une lumière combinée ;

la division de la lumière combinée avec un premier séparateur (64) en une première partie de la lumière combinée et une deuxième partie de la lumière combinée ;

la réception de la première partie de la lumière combinée dans un premier interféromètre Fabry-Pérot (41) situé dans une pointe du capteur optique (16) ;

l'exposition du premier interféromètre Fabry-Pérot (41) à la température et à un deuxième paramètre physique ;

la réception de la deuxième partie de la lumière combinée dans un deuxième interféromètre Fabry-Pérot (42) situé dans la pointe du capteur optique (16) ;

l'exposition du deuxième interféromètre de Fabry-Pérot (42) à la température mais pas au deuxième paramètre physique ;

la réception de la lumière réfléchie depuis une première cavité du premier interféromètre Fabry-Pérot (41) dans un premier détecteur optique (70) à travers un chemin optique comprenant une lentille ou un miroir et un premier interféromètre Fizeau (69) ;

la réception de la lumière réfléchie depuis une deuxième cavité du deuxième interféromètre Fabry-Pérot (42) dans un deuxième détecteur optique (70) à travers un chemin optique comprenant une lentille ou un miroir et un deuxième interféromètre Fizeau (69) ; et

l'analyse des données reçues par le premier détecteur optique (70) et le deuxième détecteur optique (70) pour calculer une valeur pour la température et le deuxième paramètre physique.

**8.** Procédé selon la revendication 7, dans lequel le paramètre physique est la pression.

**9.** Procédé selon la revendication 7 ou 8, comprenant en outre le calcul d'une transformée de Fourier d'un spectre d'interférence pour déterminer un changement de dimension d'une première cavité (45) du premier interféromètre Fabry-Pérot (41).

**10.** Procédé selon la revendication 7 ou 8, comprenant en outre l'utilisation d'un procédé numérique pour mesurer une première dimension d'une première cavité (45) du premier interféromètre Fabry-Pérot (41) et pour mesurer une deuxième dimension d'une deuxième cavité (45) du deuxième interféromètre Fabry-Pérot (42) en détectant un maximum du motif d'interférence destructive produit le long d'un premier circuit optique et d'un deuxième circuit optique.

**11.** Procédé selon la revendication 10, comprenant en outre l'utilisation d'un procédé numérique pour détecter et suivre le maximum du motif d'interférence destructive sur la base de l'intensité des pixels d'un photodétecteur linéaire ou matriciel dans lequel les informations de pic d'interférence sont combinées avec la géométrie du premier interféromètre Fizeau et du deuxième interféromètre Fizeau pour calculer la première dimension et la deuxième dimension.

**12.** Procédé selon la revendication 10, comprenant en outre la conversion de la deuxième dimension en une mesure de température en utilisant les propriétés physiques de la deuxième cavité (45) et la conversion de la première dimension en le paramètre physique mesuré en utilisant les propriétés physiques de la première cavité et la mesure de température.

**13.** Procédé selon l'une quelconque des revendications 10 à 12, comprenant en outre l'utilisation d'une recherche par recuit simulé ou d'une interpolation de sous-pixels pour détecter et suivre un pic d'interférence destructive.

**14.** Procédé selon l'une quelconque des revendications 10 à 13, comprenant en outre le calcul et l'analyse d'une transformée de Fourier d'un spectre d'interférence d'un motif de franges et l'équilibrage d'une intensité des premières sources lumineuses à bande étroite et de la deuxième source lumineuse à bande étroite sur une plage de températures.

15. Procédé selon l'une quelconque des revendications 10 à 14 comprenant en outre l'étalonnage de l'interrogateur (12) pour mesurer une dimension de cavité du premier interféromètre Fabry-Pérot (41) indépendamment du deuxième interféromètre Fabry-Pérot (42).

Optoelectronic Interrogator — 12

Optical Extension Cable — 14

Optical Transducer — 16

16A

10

*FIG. 1*

**FIG. 2**

EP 3 828 506 B1

*FIG. 3*

**FIG. 4**

EP 3 828 506 B1

**FIG. 5**

EP 3 828 506 B1

*FIG. 6*

FIG. 7

**FIG. 8**

**FIG. 9**

EP 3 828 506 B1

FIG. 10

FIG. 11

**FIG. 12**

**FIG. 13**

EP 3 828 506 B1

**FIG. 14**

**FIG. 15**

EP 3 828 506 B1

**FIG. 16**

EP 3 828 506 B1

**FIG. 17**

EP 3 828 506 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1598635 A
- GB 2319335 A